# EUROPÄISCHE PATENTSCHRIFT

(11) **EP 1 409 591 B1**
(45) Veröffentlichungstag und Bekanntmachung des Hinweises auf die Patenterteilung: **21.01.2009**
(21) Anmeldenummer: 02754243.0
(22) Anmeldetag: 25.06.2002
(51) Int. Cl.: C08L 95/00, C09J 195/00, C08K 3/00, G10K 11/162, G10K 11/16, G10K 11/165

(54) **VERFAHREN ZUR HERSTELLUNG UND MAGNETISIERUNG EINER MAGNETPULVER ENTHALTENDEN BITUMENFOLIE**
METHOD FOR PRODUCING AND MAGNETISING A BITUMEN FILM CONTAINING MAGNETIC POWDER
PROCEDE POUR LA PRODUCTION ET LA MAGNETISATION D'UNE FEUILLE DE BITUME CONTENANT DE LA POUDRE MAGNETIQUE

(30) Priorität: 25.06.2001 DE 10130026
(43) Veröffentlichungstag der Anmeldung: 21.04.2004
(73) Patentinhaber: CWW-GERKO Akustik GmbH, 67547 Worms (DE)
(72) Erfinder: POLAK, Josef, 55294 Bodenheim (DE); FREIST, Christoph, 33613 Bielefeld (DE); MANNEBACH, Gerd, 67550 Worms-Abenheim (DE); HOTZ, Ernst, 69250 Schönau (DE); OSTER, Joachim, 65527 Niedernhausen (DE)
(74) Vertreter: Hebing, Norbert
(86) Internationale Anmeldenummer: PCT/DE2002/002272
(87) Internationale Veröffentlichungsnummer: WO 2003/000490

(56) Entgegenhaltungen:
- EP-A- 0 285 740
- DE-A- 3 825 494
- FR-A- 2 561 582
- US-A- 5 002 677

## Beschreibung

Die Erfindung betrifft ein Verfahren zur Herstellung und Magnetisierung einer Magnetpulver enthaltenden Bitumenfolie, bei welchem das Magnetpulver in einer Magnetisierungsstation durch ein starkes Magnetfeld magnetisiert wird.

Ein Verfahren der vorstehenden Art ist in der DE 37 11 810 A1 beschrieben. Das Magnetpulver, bei dem es sich um ein isotropes Material wie Bariumferritpulver handelt, dient bei solchen Bitumenfolien dazu, die Dämpfungsfolien während des Einbaus vorläufig zu fixieren, bis sie durch Aufschmelzen und Wiederverfestigen eines Klebers während eines Ofendurchganges endgültig mit der Unterlage verbunden sind. In der Schrift wird angeführt, dass die Ferritpartikel nach der Herstellung der Folie in einem starken Magnetfeld in gerichtete Permanentmagnete umgewandelt werden. Das geschieht bei Raumtemperatur.

Die Praxis hat gezeigt, dass oftmals die magnetischen Kräfte solcher Bitumenfolien nicht ausreichend sind oder ein relativ hoher Anteil von Magnetpulver erforderlich ist, um ausreichende magnetische Kräfte zu erzielen. Es ist jedoch insbesondere aus Gewichtsgründen wünschenswert, dass der Anteil des Magnetpulvers möglichst gering ist, da solche Bitumenfolien sehr häufig in Kraftfahrzeugen eingesetzt werden und dort eine Erhöhung des Gewichtes zu einem Mehrverbrauch an Kraftstoff führt und die Beschleunigungsleistung vermindert.

Der Erfindung liegt das Problem zugrunde, ein Verfahren der eingangs genannten Art zu entwickeln, welches zu Bitumenfolien führt, die bei gleichen Magnetkräften ein wesentlich geringeres Flächengewicht aufweisen als die nach dem bekannten Verfahren hergestellten Bitumenfolien.

Dieses Problem wird erfindungsgemäß dadurch gelöst, dass die Bitumenfolie vor der Magnetisierung auf eine solche Temperatur erwärmt wird, dass sich die Magnetpulverkörner durch die Wirkung des Magnetfeldes ausrichten können und dass die Bitumenfolie unmittelbar nach der Magnetisierung zur Erhaltung der Magnetisierung ausreichend gekühlt wird.

Durch die erfindungsgemäße Erwärmung der Bitumenfolie vor der Magnetisierung sind die Magnetpulverkörner in der Lage, sich in eine Vorzugsrichtung zu orientieren, welche durch die anschließende Abkühlung konserviert wird. Dadurch genügt wesentlich weniger Magnetpulver, um eine gleiche magnetische Kraft zu erzielen, wie bei Bitumenfolien nach dem Stand der Technik. Bei der Bitumenfolie nach der eingangs genannten DE 37 11 810 A1 ist beispielsweise für den Einsatz in Kraftfahrzeugen ein Magnetpulveranteil von 60 - 70 Gew.-% erforderlich, während für eine Bitumenfolie nach dem erfindungsgemäßen Verfahren 30 - 40 Gew.-% genügen. Insgesamt ergibt sich durch die Erfindung eine Gewichtsersparnis von etwa 20 % bei gleicher magnetischer Kraft und unter Beibehaltung oder sogar Anhebung der akustischen Eigenschaften.

Besonders wirkungsvoll und wirtschaftlich durchführbar ist das Verfahren, wenn die Bitumenfolie zur Magnetisierung auf eine Temperatur von über 100 °C erwärmt und danach auf mindestens etwa 70°C abgekühlt wird. Durch diese Abkühlung auf mindestens etwa 70°C wird die Magnetisierung und Orientierung "eingefroren". Weiterhin würde es bei höheren Temperaturen beim Abziehen der Bitumenfolie von einer sie kühlenden Walze zu einer Desorientierung der einzelnen Körner des Magnetpulvers kommen und dadurch die erzielte Magnetisierung reduziert werden.

Der Energiebedarf bei der Durchführung des erfindungsgemäßen Verfahrens ist besonders gering, wenn gemäß einer anderen Weiterbildung der Erfindung nur eine Schicht der Bitumenfolie von etwa 1 mm Dicke auf über 100 °C erwärmt wird.

Das Verfahren kann sehr einfach ausgeführt werden, wenn die Magnetisierung und Kühlung auf einer Permanentmagnete aufweisenden, wassergekühlten Magnetwalze erfolgt.

Besonders starke Magnetkräfte lassen sich mit einem verhältnismäßig geringen Anteil von Magnetpulver erzielen, weil als Magnetpulver ein anisotropes Material benutzt wird.

Vorteilhaft ist es, wenn als Magnetpulver anisotropes Barium oder Strontium benutzt wird.

Ein Festkleben der bituminösen Masse und der daraus erzeugten Folie auf dem Stahlband der Stahlbandanlage lässt sich ausschließen, wenn die bituminöse Masse zur Herstellung der Bitumenfolie mittels Kalibrierwalzen auf eine ein Stahlband abdeckende Trägerfolie aufgewalzt wird.

Bei der Trägerfolie handelt es sich vorzugsweise um eine Polyesterfolie.

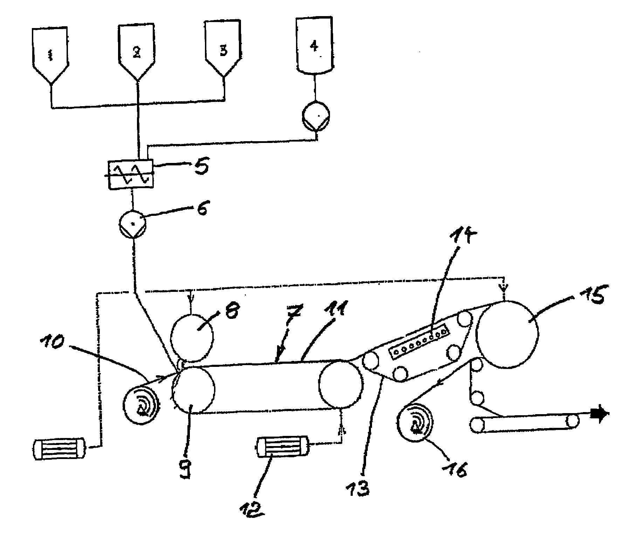

Das erfindungsgemäße Verfahren kann auf unterschiedliche Weise ausgeführt werden. Zur weiteren Verdeutlichung seines Grundprinzips wird nachfolgend auf die Zeichnung Bezug genommen.

Die Zeichnung zeigt vier Silos 1 - 4, in welchen die für die Herstellung der Bitumenfolie erforderlichen Rohstoffe bevorratet sind. Diese Rohstoffe werden einem Mischer 5 zugeführt und dort intensiv miteinander vermischt. Hauptbestandteil der Mischung ist ein anisotropes Material, insbesondere Ba-Ferrit oder Sr-Ferrit.

Nach Ablauf der erforderlichen Mischzeit wird die so hergestellte Masse mittels einer Pumpe 6 einer Stahlbandanlage 7 mit Kalibrierwalzen 8, 9 und einem umlaufenden Stahlband 11 zugeführt und dort zu einer Bahn in der gewünschten Dicke und Breite ausgewalzt. Um ein Ankleben der heißen Masse auf dem nicht gekühlten Stahlband 11 der Stahlbandanlage 7 zu verhindern, bzw. um die Bahn vom Stahlband 11 abziehen zu können, wird eine Polyesterfolie 10 aufgewalzt. Die obere Kalibrierwalze 8 wird gekühlt, so dass sich hier die Bahn von der Kalibrierwalze 8 abziehen lässt.

Die hergestellte Folie wird nun mittels des Stahlbandes 11, welches mittels einer Thermalölheizung 12 temperiert ist, zu einem Heizband 13 transportiert und dort über ein Heizfeld 14 auf etwa 140°C erhitzt. Hierbei muss nur eine Schichtstärke von etwa 1 mm durchgeheizt sein. Der andere Teil der Folie kann aus energietechnischen Gründen durchaus eine niedrigere Temperatur haben. Die verwendete Polyesterfolie 10 dient als Trägerfolie für den Transport. Eine Bitumenfolie mit einer solchen Temperatur könnte sonst nicht transportiert und zwischen verschiedenen Anlageteilen übergeben werden.

Vom Heizband 13 gelangt die Bitumenfolie zu einer Magnetisierungsstation 15. Hier wird die heiße Bitumenfolie mittels einer großen Permanentmagnetwalze (Durchmesser 1.000 mm) mit Innen- und Außenkühlung magnetisiert und gleichzeitig auf etwa 70°C abgekühlt. Da die Bitumenfolie nach der Abkühlung wieder genügend Eigenfestigkeit besitzt, kann die Polyesterfolie 10 mittels einer Aufwickelhaspel 16 abgezogen werden.

Die Bitumenfolie wird anschließend je nach den Erfordernissen ihres Einsatzes mit einer Versiegelung, Hot-Melt oder Selbstkleber beschichtet. Anschließend werden Teile in unterschiedlicher Geometrie ausgestanzt, die dann in erster Linie in der Automobilindustrie als Schallschutzfolien einsetzbar sind.

### Bezugszeichenliste

- 1: Silo
- 2: Silo
- 3: Silo
- 4: Silo
- 5: Mischer

- 6: Pumpe
- 7: Stahlbandanlage
- 8: Kalibrierwalze
- 9: Kalibrierwalze
- 10: Polyesterfolie

- 11: Stahlband
- 12: Thermalölheizung
- 13: Heizband
- 14: Heizfeld
- 15: Magnetisierungsstation

- 16: Aufwickelhaspel

## Patentansprüche

1. Verfahren zur Herstellung und Magnetisierung einer Magnetpulver enthaltenden Bitumenfolie, bei welchem das Magnetpulver in einer Magnetisierungsstation durch ein starkes Magnetfeld magnetisiert wird, **dadurch gekennzeichnet, dass** das Magnetpulver aus einem anisotropen Material besteht, dass die Bitumenfolie vor der Magnetisierung auf eine solche Temperatur erwärmt wird, dass sich die Magnetpulverkörner durch die Wirkung des Magnetfeldes ausrichten können, wobei die Magnetisierung bei dieser Temperatur der Bitumenfolie erfolgt, und dass die Bitumenfolie unmittelbar nach der Magnetisierung zur Erhaltung der Magnetisierung und der Ausrichtung der Magnetpulverkörner mittels einer Kühleinrichtung ausreichend gekühlt wird.

2. Verfahren nach Anspruch 1, **dadurch gekennzeichnet, dass** die Bitumenfolie zur Magnetisierung auf eine Temperatur von über 100 °C erwärmt und danach auf mindestens etwa 70°C abgekühlt wird.

3. Verfahren nach den Ansprüchen 1 oder 2, **dadurch gekennzeichnet, dass** nur eine Schicht der Bitumenfolie von etwa 1 mm Dicke auf über 100 °C erwärmt wird.

4. Verfahren nach einem der vorangehenden Ansprüche, **dadurch gekennzeichnet, dass** die Magnetisierung und Kühlung auf einer Permanentmagnete aufweisenden, wassergekühlten Magnetwalze erfolgt.

5. Verfahren nach einem der vorangehenden Ansprüche, **dadurch gekennzeichnet, dass** als Magnetpulver anisotropes Barium- oder Strontiumferrit benutzt wird.

6. Verfahren nach zumindest einem der vorangehenden Ansprüche, **dadurch gekennzeichnet, dass** eine bituminöse Masse zur Herstellung der Bitumenfolie mittels Kalibrierwalzen auf eine ein Stahlband abdeckende Trägerfolie aufgewalzt wird.

7. Verfahren nach Anspruch 6, **dadurch gekennzeichnet, dass** die Trägerfolie eine Polyesterfolie ist.

## Claims

1. A method for the manufacture and magnetisation of a bitumen film containing a magnetic powder, in which the magnetic powder is magnetized by a strong magnetic field in a magnetisation station, **characterized in that** the magnetic powder consists of an anisotropic material, **in that** prior to magnetisation, the bitumen film is heated to a temperature such that the grains of magnetic powder can align themselves under the influence of the magnetic field, wherein magnetisation of the bitumen film occurs at said temperature, and **in that** immediately following magnetisation, the bitumen film is cooled sufficiently to preserve the magnetisation and the alignment of the grains of magnetic powder by means of a cooling device.

2. The method of claim 1, **characterized in that** the bitumen film is heated to a temperature of more than 100 °C for magnetisation and thereafter is cooled to at least approximately 70°C.

3. The method of claim 1 or claim 2, **characterized in that** only a layer of the bitumen film approximately 1 mm thick is heated to more than 100°C.

4. The method of one of the preceding claims, **characterized in that** magnetisation and cooling are carried out on a water-cooled magnetic roll provided with a permanent magnet.

5. The method of one of the preceding claims, **characterized in that** anisotropic barium ferrite or strontium ferrite is used as the magnetic powder.

6. The method according to at least one of the preceding claims, **characterized in that** a bituminous mass for the manufacture of the bitumen film is rolled by means of calibrating rolls onto a carrier film covering a steel belt.

7. The method of claim 6, **characterized in that** the carrier film is a polyester film.

## Revendications

1. Procédé de production et de magnétisation d'une feuille de bitume contenant de la poudre magnétique, dans lequel la poudre magnétique est magnétisée dans un poste de magnétisation par un champ magnétique intense, **caractérisé en ce que** la poudre magnétique est constituée d'un matériau anisotrope, **en ce que** la feuille de bitume est chauffée par la magnétisation à une température telle que les grains de poudre magnétique puissent s'aligner par l'effet du champ magnétique, moyennant quoi la magnétisation a lieu à cette température de la feuille de bitume et **en ce que** la feuille de bitume est suffisamment refroidie directement après la magnétisation au moyen d'un dispositif de refroidissement afin de conserver la magnétisation et l'alignement des grains de poudre magnétique.

2. Procédé selon la revendication 1, **caractérisé en ce que** la feuille de bitume est chauffée en vue de la magnétisation à une température supérieure à 100°C et ensuite refroidie à au moins environ 70°C.

3. Procédé selon les revendications 1 ou 2, **caractérisé en ce que** seule une couche de la feuille de bitume d'environ 1 mm d'épaisseur est chauffée à plus de 100°C.

4. Procédé selon une des revendications précédentes, **caractérisé en ce que** la magnétisation et le refroidissement ont lieu sur un rouleau magnétique refroidi à l'eau, présentant des aimants permanents.

5. Procédé selon une des revendications précédentes, **caractérisé en ce que** comme poudre magnétique, on utilise du ferrite de baryum ou de strontium anisotrope.

6. Procédé selon au moins une des revendications précédentes, **caractérisé en ce que** une masse bitumeuse est roulée au moyen de rouleaux de calibrage sur une feuille porteuse recouvrant une bande d'acier afin de produire la feuille de bitume.

7. Procédé selon la revendication 6, **caractérisé en ce que** la feuille porteuse est une feuille de polyester.
